# FASCICULE DE BREVET EUROPEEN

(11) **EP 1 609 761 B1**
(45) Date de publication et mention de la délivrance du brevet: **19.08.2009**
(21) Numéro de dépôt: 05290150.1
(22) Date de dépôt: 24.01.2005
(51) Int. Cl.: C01G 49/14

(54) **Procédé de fluidisation de sulfate ferreux par des sels de magnésium**
Verfahren zur Fluidisierung von Eisensulfate mittels Magnesiumsalze
Process for the fluidization of iron sulfates using magnesium salts

(30) Priorité: 04.02.2004 FR 0401049
(43) Date de publication de la demande: 28.12.2005
(73) Titulaire: Holcim Technology Ltd., 8645 Jona (CH)
(72) Inventeur: Degre, Geoffrey, 7000 Mons (Belgique) (BE); Duron, Jacques, 62200 Boulogne Sur Mer (FR); Vecoven, Jacques, 59148 Flines Les Raches (FR)
(74) Mandataire: Haffner und Keschmann Patentanwälte OG

(56) Documents cités:
- EP-A- 0 321 747
- GB-A- 1 250 317
- US-A- 2 771 342
- PATENT ABSTRACTS OF JAPAN vol. 1996, no. 07, 31 juillet 1996 (1996-07-31) & JP 08 059245 A (RASA IND LTD), 5 mars 1996 (1996-03-05)

## Description

La présente invention concerne un procédé de fluidisation de sulfate ferreux humide heptahydraté.

### ARRIERE PLAN DE L'INVENTION

On connaît de nombreuses applications du sulfate ferreux heptahydraté, en particulier pour la réduction du chrome hexavalent du ciment lors de son utilisation dans des bétons.

Dans cette application le sulfate ferreux est rajouté en quantité très faible dans le ciment (de l'ordre de quelques pour mille) et il est donc nécessaire de pouvoir le doser selon des quantités précises. Toutefois lors de sa production, le sulfate ferreux se présente sous forme d'une pâte humide très difficile à manipuler et donc très difficile à doser et très difficile à mélanger avec le ciment. Ce sulfate ferreux pâteux sera nommé dans la suite du document « sulfate ferreux humide ». Pour fluidiser le sulfate ferreux humide, il est connu de procéder à un séchage de celui-ci, par exemple en le faisant passer dans un tambour à air chaud en le mélangeant au préalable avec du sulfate ferreux déjà séché se présentant sous la forme d'une semoule fluide. Toutefois, lors du séchage le sulfate ferreux humide perd sa forme heptahydratée pour passer sous une forme monohydratée peu soluble donc peu apte à réduire le chrome hexavalent du ciment. Le sulfate ferreux fluidisé obtenu selon ce procédé est donc inutilisable pour le traitement du ciment.

On connaît également du document US 2 771 342 un procédé de séchage à froid du sulfate ferreux humide heptahydraté consistant à rajouter du carbonate de calcium finement broyé dans le sulfate ferreux humide. Le carbonate de calcium réagit avec le sulfate ferreux humide à caractère acide et neutralise ses propriétés réductrices de sorte que le produit ainsi obtenu est également impropre à une utilisation dans le ciment pour réduire le chrome hexavalent.

Le document EP-A-321 747 décrit également l'obtention de sulfate ferreux fluidisé en mélangeant au sulfate ferreux humide une quantité appropriée de lignite finement broyée. Les propriétés réductrices du sulfate ferreux ne sont pas affectées mais la matière organique introduite dans le ciment agit négativement sur les propriétés rhéologiques et mécaniques des bétons réalisés avec le ciment ainsi traité.

On connaît également des déshydratants comprenant un gel de silice sous forme de granulés. Ce produit est satisfaisant du point de vue technique mais son coût est prohibitif pour une utilisation pour le traitement du ciment.

### OBJET DE L'INVENTION

Un but de l'invention est de proposer un procédé de fluidisation du sulfate ferreux humide heptahydraté permettant de conserver à celui-ci ses propriétés réductrices du chrome hexavalent et pouvant être mélangé avec du ciment sans nuire aux propriétés mécaniques du béton réalisé avec ce ciment et sans augmenter de façon notable le coût du ciment.

### RESUME DE L'INVENTION

En vue de la réalisation de ce but on prévoit selon l'invention un procédé de fluidisation de sulfate ferreux humide heptahydraté comportant l'étape d'ajouter à du sulfate ferreux humide une quantité suffisante de produit déshydratant à base de sel de magnésium en poudre.

### DESCRIPTION DETAILLEE DE L'INVENTION

Selon un premier mode de mise en oeuvre de l'invention le produit déshydratant est du silicate de magnésium sous forme d'une poudre sèche dont la granulométrie est inférieure à 200 µm. Pour obtenir une fluidité optimale du sulfate ferreux à un prix raisonnable, le silicate de magnésium est de préférence utilisé selon une poudre sèche, ayant une granulométrie correspondant à au moins 95 % de grains inférieurs à 80 µm, introduite dans le sulfate ferreux humide selon une quantité comprise entre 8 % et 15 % en poids du sulfate ferreux humide.

Selon un autre mode de mise en oeuvre du procédé selon l'invention, on introduit dans le sulfate ferreux humide de l'oxyde de magnésium sous forme d'une poudre sèche ayant une granulométrie inférieure à 200 µm, de préférence une granulométrie correspondant à au moins 95 % de grains inférieurs à 80 µm, selon une quantité comprise entre 3 % et 8 % en poids du sulfate ferreux humide.

Bien entendu, l'invention n'est pas limitée aux modes de mise en oeuvre décrits ci-dessus et on peut y apporter des variantes de réalisation sans sortir du cadre de l'invention tel que défini par les revendications.

En particulier, le produit déshydratant n'est généralement pas un sel de magnésium pur et les quantités mentionnées ci-dessus seront adaptées en fonction de la composition exacte du produit déshydratant et la fluidité recherchée. En particulier on a constaté qu'il était possible d'utiliser des sels de magnésium ayant une granulométrie jusqu'à 500 µm.

En outre en fonction de la composition et de la granulométrie, la quantité de silicate de magnésium peut varier entre 3 % et 25 % en poids du sulfate ferreux humide et la quantité d'oxyde de magnésium peut varier entre 1 % en poids et 18 % en poids du sulfate ferreux humide.

## Revendications

1. Procédé de fluidisation de sulfate ferreux humide heptahydraté comportant l'étape d'ajouter à du sulfate ferreux humide une quantité suffisante de produit déshydratant, **caractérisé en ce que** le produit déshydratant comprend du sel de magnésium en poudre.

2. Procédé selon la revendication 1, **caractérisé en ce que** le produit déshydratant comprend du silicate de magnésium selon une quantité de 3 % à 25 % en poids du sulfate ferreux humide.

3. Procédé selon la revendication 2, **caractérisé en ce que** le silicate de magnésium est introduit dans le sulfate ferreux humide selon une quantité comprise entre 8 % et 15 % en poids du sulfate ferreux humide.

4. Procédé selon la revendication 1, **caractérisé en ce que** le produit déshydratant comprend de l'oxyde de magnésium introduit dans le sulfate ferreux humide selon une quantité comprise entre 1 % et 18 % en poids du sulfate ferreux humide.

5. Procédé selon la revendication 4, **caractérisé en ce que** la quantité d'oxyde de magnésium est comprise entre 3 % et 8 % en poids du sulfate ferreux humide.

6. Procédé selon la revendication 1, **caractérisé en ce que** le produit déshydratant a une granulométrie inférieure à 500 µm, de préférence inférieure à 200 µm.

7. Procédé selon la revendication 6, **caractérisé en ce que** le produit déshydratant a une granulométrie correspondante à au moins 95 % de grains inférieurs à 80 µm.

## Claims

1. Method for the fluidization of humid ferrous sulphate comprising the step of adding a sufficient amount of a drying agent to humid ferrous sulphate, **characterised in that** the drying agent comprises a magnesium salt in powder form.

2. Method according to claim 1, **characterised in that** the drying agent comprises magnesium silicate in a quantity of 3 %(w/w) to 25 %(w/w) of the humid ferrous sulphate.

3. Method according to claim 2, **characterised in that** the magnesium silicate is introduced into the humid ferrous sulphate in a quantity of between 8 %(w/w) and 15 %(w/w) of the humid ferrous sulphate.

4. Method according to claim 1, **characterised in that** the drying agent comprises magnesium oxide, which is introduced into the ferrous sulphate in a quantity of between 1 %(w/w) and 18 %(w/w) of the humid ferrous sulphate.

5. Method according to claim 4, **characterised in that** the quantity of magnesium oxide is comprised between %(w/w) and 8 %(w/w) of the humid ferrous sulphate.

6. Method according to claim 1, **characterised in that** the drying agent has a grit size smaller than 500 µm, preferably smaller than 200 µm.

7. Mehod according to claim 6, **characterised in that** the drying agent has a granulometry, in which at least 95 % of the grains are smaller than 80 µm.

## Patentansprüche

1. Verfahren zur Fluidisierung von feuchtem Eisensulfat Heptahydrat, umfassend den Schritt des zugebens einer ausreichenden Menge eines dehydrierenden Mittels zu feuchtem Eisensulfat, **dadurch gekennzeichnet, dass** das dehydrierende Mittel ein pulverförmiges Magnesiumsalz umfasst.

2. Verfahren nach Anspruch 1, **dadurch gekennzeichnet, dass** das dehydrierende Mittel Magnesiumsilikat in einer Menge von 3 Gew.% - 25 Gew.% des feuchten Eisensulfats umfasst.

3. Verfahren nach Anspruch 2, **dadurch gekennzeichnet, dass** das Magnesiumsilikat in einer Menge zwischen 8 Gew.% und 15 Gew.% des feuchten Eisensulfats in das feuchte Eisensulfat eingebracht wird.

4. Verfahren nach Anspruch 1, **dadurch gekennzeichnet, dass** das dehydrierende Mittel Magnesiumoxid umfasst, welches in einer Menge zwischen 1 Gew.% und 18 Gew.% des feuchten Eisensulfats in das feuchte Eisensulfat eingebracht wird.

5. Verfahren nach Anspruch 4, **dadurch gekennzeichnet, dass** die Menge des Magnesiumoxids zwischen 3 Gew.% und 8 Gew.% des feuchten Eisensulfats liegt.

6. Verfahren nach Anspruch 1, **dadurch gekennzeichnet, dass** das dehydrierende Mittel eine Korngröße von kleiner als 500 µm, bevorzugt kleiner als 200 µm aufweist.

7. Verfahren nach Anspruch 6, **dadurch gekennzeichnet, dass** das dehydrierende Mittel eine Korngrößenverteilung hat, bei welcher mindestens 95% der Körner kleiner als 80 µm sind.
